# DEMANDE DE BREVET EUROPEEN

(11) **EP 3 587 178 A1**
(43) Date de publication de la demande: **01.01.2020**
(21) Numéro de dépôt: 19177283.9
(22) Date de dépôt: 29.05.2019
(51) Int. Cl.: B60P 3/075, B60P 7/08

(54) **CROCHET D'ARRIMAGE DE CHARGE SUR LE PLATEAU D'UN VEHICULE DE TRANSPORT**

(30) Priorité: 29.06.2018 FR 1855930
(71) Demandeur: Lohr Industrie, 67980 Hangenbieten (FR)
(72) Inventeur: ANDRE, Jean-Luc, 67120 MOLSHEIM (FR)
(74) Mandataire: Merckling, Norbert

(57) **Abrégé**

Le crochet d'arrimage (1) comporte un doigt d'accrochage recourbé (6) dont l'extrémité libre, destinée à être introduite dans des orifices traversants oblongs prévus dans le plateau d'un véhicule de transport, comporte une spatule (13) aplatie se prolongeant latéralement de chaque côté par une extension latérale (15). Il comporte également une partie intermédiaire (7) allongée et de section ronde ou ovale, et une partie de liaison (8) préférentiellement annulaire dont l'orifice (9) est délimité dans sa partie interne par des bords arrondis (10).

La face supérieure (16) de la spatule qui est dirigée en regard vers la partie de liaison (8) est arrondie en relief lorsque considérée de profil.

Le crochet d'arrimage (1) comporte préférentiellement un second doigt d'accrochage recourbé (20) classique prévu à l'opposé de l'autre doigt (6) de manière à former un S.

## Description

### Domaine technique

La présente invention se rapporte à un crochet d'arrimage d'une charge sur le plateau d'un véhicule de transport au moyen d'une sangle.

L'invention concerne plus particulièrement un crochet d'arrimage comportant un doigt d'accrochage recourbé dont l'extrémité libre est destinée à être introduite dans des orifices traversants prévus dans le plateau du véhicule de transport et une partie de liaison habituellement annulaire destinée à recevoir la sangle ou, plus préférentiellement, un organe de liaison fixé à la sangle, le doigt d'accrochage recourbé et la partie de liaison étant reliés par une partie intermédiaire.

### Etat de la technique

Notamment dans le domaine du transport de véhicules sur le plateau d'un wagon ferroviaire ou d'un porte-voiture, il est connu d'utiliser des systèmes d'arrimage pour immobiliser les roues des véhicules sur ledit plateau. Bien entendu, des systèmes d'arrimage très similaires peuvent également être prévus pour immobiliser n'importe quel type de charge sur un plateau.

Ces systèmes d'arrimage comprennent généralement une sangle reliée à des crochets d'arrimage. Un crochet d'arrimage est généralement prévu au niveau d'une extrémité de la sangle tandis que l'autre extrémité est engagée avec un dispositif de mise en tension, par exemple un tendeur de sangle à cliquet ou un dispositif dédié prévu sur le plateau du véhicule de transport. La sangle est habituellement passée au-dessus d'une roue d'un véhicule à immobiliser, puis mise en tension afin de plaquer la roue vers le bas sur le plateau. Un crochet d'arrimage est généralement prévu à l'avant et à l'arrière de la roue à immobiliser de sorte de relier localement la sangle au plateau. De manière plus précise, la sangle est habituellement liée à un crochet d'extrémité, elle coulisse dans un autre crochet d'arrimage situé entre la roue et le tendeur de sangle. Vue de dessus, les crochets d'arrimage sont alignés au mieux dans l'axe de la roue. Cependant, le tendeur pouvant se trouver situé sous la caisse de la voiture, il est généralement déporté vers l'extérieur. Il s'ensuit des efforts latéraux principalement au niveau du crochet coulissant qui ont tendance à l'incliner vers l'extérieur.

Dans le but de permettre la fixation d'une sangle sur le plateau, le plateau des wagons ferroviaires ou des porte-voitures présente des orifices traversants de forme oblongue et se prolongeant longitudinalement dans l'axe du véhicule de transport. L'extrémité recourbée des crochets d'arrimage est alors introduite dans ces orifices traversants afin de s'accrocher au niveau de leur bordure avant ou arrière. Lorsque la sangle est mise en tension l'extrémité libre des crochets vient se plaquer contre le plateau, en appui en sous-face de celui-ci.

Avec l'augmentation des masses des voitures, la tension présente dans les systèmes d'arrimage doit être augmentée. De ce fait les crochets traditionnels ont tendance à endommager le plateau des véhicules de transport. Il a été constaté en effet que l'extrémité libre des crochets d'arrimage avait tendance à déformer la matière en sous-face des plateaux conduisant parfois à la rupture du platelage des plateaux et ainsi au mauvais maintien du véhicule.

Il convient donc de répondre à ce problème, de préférence sans avoir à modifier le plateau des véhicules de transport.

Par les documents EP 3238990 A1, US 4960353 A, et US 7871228 B2 on connait un crochet d'arrimage comportant une spatule de forme cylindrique et rectiligne. Par sa forme rectiligne présentant une courbure dans un seul plan, la spatule ne permet pas un léger pivotement des extensions latérales par rapport au plateau lorsqu'elles sont plaquées contre la sous-face de celui-ci. Ainsi, la spatule est susceptible de détériorer la sous-face du plateau lorsque la sangle est sollicitée latéralement.

Par le document AU 611700 B2 on connait un crochet d'arrimage qui n'est pas prévu pour être introduit dans des orifices traversants prévus dans le plateau mais dans des anses rapportées sur ledit plateau. Au niveau de son extrémité libre, ce crochet comporte une pièce ronde aux bords anguleux qui est susceptible de détériorer la sous-face du plateau lorsqu'elle est plaquée contre la sous-face du plateau.

### Description de l'invention

Ayant constaté que, lors de la mise en tension des sangles, les crochets d'arrimage antérieurs engendrait une concentration de contraintes trop importante pour la matière, l'objet de la présente invention vise par conséquent à pallier les inconvénients de l'art antérieur en proposant un nouveau type de crochet qui ne détériore pas le plateau des véhicules de transport, même en cas de forte mise en tension de la sangle.

Les objets assignés à l'invention sont atteints à l'aide d'un crochet d'arrimage d'une charge sur le plateau d'un véhicule de transport au moyen d'une sangle, ledit crochet comportant un doigt d'accrochage recourbé dont l'extrémité libre est destinée à être introduite dans des orifices traversants prévus dans le plateau du véhicule de transport et une partie de liaison présentant un orifice destiné à recevoir la sangle ou un organe de liaison fixé à la sangle, le doigt d'accrochage recourbé et la partie de liaison étant reliés par une partie intermédiaire, caractérisé en ce que :
- la partie intermédiaire est allongée et ses portions destinées à venir en contact les orifices traversants du plateau sont arrondies ;
- le doigt d'accrochage recourbé comporte une partie courbe dont les portions destinées à venir en contact avec les orifices traversants sont arrondies ;
- au niveau de son extrémité libre, le doigt d'accrochage recourbé comporte une spatule, ladite spatule étant de forme aplatie et se prolongeant latéralement de chaque côté par une extension latérale, la face supérieure de la spatule qui est dirigée en regard vers la partie de liaison étant arrondie en relief lorsque considérée de profil ; et
- le doigt d'accrochage recourbé, la partie intermédiaire et la spatule sont formés d'une seule pièce en métal.

Pouvant être formé d'une seule pièce en métal, au moins pour son doigt d'accrochage recourbé, sa partie intermédiaire et sa spatule, le crochet est très résistant et peut être produit à moindre coût.

La partie intermédiaire crée une distance entre le doigt d'accrochage recourbé et la partie de liaison de sorte de permettre au crochet de pivoter librement lorsqu'il est engagé dans un des orifices traversants du plateau. Elle permet également de positionner l'appui dans une zone plane située entre les orifices traversants prévus dans le plateau.

La forme de la partie courbe du doigt d'accrochage recourbé qui lie la spatule à la partie intermédiaire est étudiée pour que l'appui se fasse toujours sur cette zone plane même si le crochet est incliné. Cette partie courbe permet de positionner la spatule en contact « sphérique » sous le plateau, avec des angles de crochets libres. Cette partie courbe présente des faces d'appui arrondies afin de ne pas détériorer le rebord des orifices traversants du plateau.

La forme arrondie des portions de la partie intermédiaire destinées à venir en contact les orifices traversants permet notamment de ne pas détériorer le rebord des orifices traversants du plateau lorsque le crochet pivote autour d'un axe sensiblement vertical. Lorsque le crochet est incliné, il y a un effort de direction parallèle au plateau. Cet effort est repris par l'appui de la partie intermédiaire sur l'embouti des orifices traversants prévus dans le plateau du véhicule de transport.

Par leur orientation, leur longueur et leur forme, les extensions latérales permettent avantageusement de répartir sur une plus grande longueur les contraintes, notamment les pressions de Hertz, exercées par la spatule contre la sous-face du plateau de sorte de ne pas détériorer ledit plateau.

Par la partie supérieure arrondie des extensions latérales on s'assure avantageusement que le crochet est toujours en contact contre la sous-face du plateau par les extensions latérales, quel que soit l'angle d'inclinaison longitudinal du crochet par rapport audit plateau.

Selon un exemple de mise en oeuvre de l'invention, la partie de liaison est de forme annulaire et elle présence un orifice central de forme générale circulaire afin de permettre notamment une libre rotation de l'étrier ou de la sangle introduit(e) dans cet orifice.

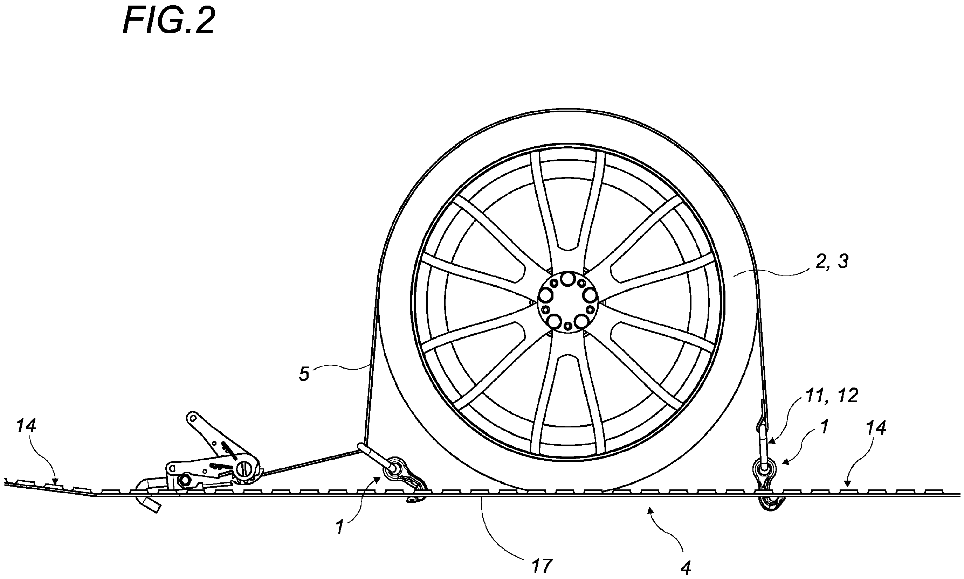

Cet orifice peut également être de forme générale ovale, ce qui autorise un léger débattement dudit étrier ou de ladite sangle dans l'orifice central. L'étrier permet de boucler correctement la sangle et de réaliser une couture. Puisqu'il peut y avoir plusieurs largeurs de sangles, plusieurs modèles d'étrier peuvent avantageusement être prévus pour un même crochet. Cette variante du crochet comportant un étrier permet une liberté supplémentaire dans l'orientation de la sangle qui laisse le crochet s'auto positionner dans les orifices traversants du plateau. L'étrier est particulièrement avantageux pour réaliser le passage de la sangle lorsque le crochet est utilisé en renvoi comme sur la figure 2 entre la roue et le dispositif à cliquet de mise en tension de la sangle.

Selon un autre exemple de mise en oeuvre de l'invention, l'axe dans lequel se prolongent les extensions latérales est orthogonal au plan dans lequel s'étend la partie de liaison. De même, selon un autre exemple de mise en oeuvre de l'invention, l'axe des extensions latérales est orthogonal à la partie intermédiaire. Ainsi, le crochet est de préférence symétrique par rapport au plan dans lequel s'étend la partie de liaison de sorte que les extensions latérales viennent en contact contre la sous-face du plateau sur toute leur longueur lorsque le crochet est déplacé verticalement vers le haut.

Selon un exemple supplémentaire de mise en oeuvre de l'invention, la face supérieure de la spatule qui est dirigée en regard vers la partie de liaison est une surface de contact bombée convexe. Le fait que la surface de contact soit légèrement bombée permet avantageusement un léger pivotement des extensions latérales par rapport au plateau lorsqu'elles sont en contact contre la sous-face de celui-ci.

Selon un exemple de mise en oeuvre de l'invention, le doigt d'accrochage recourbé et la partie de liaison sont situés dans un même plan. En effet, comme évoqué précédemment, le crochet est de préférence symétrique par rapport au plan dans lequel s'étend la partie de liaison.

Selon un autre exemple de mise en oeuvre de l'invention, l'extrémité libre de chaque extension latérale est bombée convexe. Ainsi, la spatule ne présente que des parties arrondies, voire bombées convexes, de sorte que quelle que soit l'orientation de celui-ci lorsqu'il est en appui contre la sous-face du plateau, aucune partie anguleuse en relief ne soit susceptible de détériorer le plateau en générant des concentrations de contraintes trop importantes, même lorsque le crochet vient en contact contre le plateau par l'extrémité libre d'une de ses extensions latérales.

Selon un exemple supplémentaire de mise en oeuvre de l'invention, le doigt d'accrochage recourbé ne présente aucune partie anguleuse en relief. Ainsi, comme précédemment évoqué, quelle que soit l'orientation du crochet lorsqu'il est en appui contre la sous-face du plateau, aucune partie anguleuse en relief n'est susceptible de détériorer le plateau.

Selon un exemple de mise en oeuvre de l'invention, la partie de liaison est équipée d'un étrier d'attache de sangle, et :
- soit la partie de liaison est conformée en étrier ;
- soit l'étrier est une pièce distincte de la partie de liaison qui est montée à rotation dans l'orifice la partie de liaison.

Selon un autre exemple de mise en oeuvre de l'invention, l'étrier est monté à rotation dans l'orifice de la partie de liaison selon trois degrés de liberté en rotation. Grâce à cet étrier et à son assemblage de type rotulage avec le crochet, la sangle prévue pour être guidée par l'étrier peut s'orienter librement et s'adapter à la conformation nécessaire à l'arrimage d'une charge, ou d'une roue, sur un plateau. Ce rotulage permet également de fournir des degrés de liberté supplémentaires pour absorber les variations de sanglage.

Selon un exemple supplémentaire de mise en oeuvre de l'invention, la face inférieure de la spatule qui est dirigée en éloignement de la partie de liaison est une surface sensiblement plane, bien que très légèrement bombée convexe. Ainsi, malgré sa conformation préférentiellement légèrement bombée convexe dans sa partie supérieure, la spatule est suffisamment mince pour pouvoir être introduite dans les orifices traversants du plateau, tout en restant très robuste pour résister aux efforts mécaniques subis par le crochet.

Selon un exemple de mise en oeuvre de l'invention, la partie de liaison est de forme torique. Ainsi les bords arrondis de l'orifice de la partie de liaison permettent une libre orientation de l'étrier ou de la sangle qui est introduit(e) dans celui-ci, sans présenter de risque de détérioration de ladite sangle par abrasion sur des parties saillantes et la partie de liaison ne présente pas de saillie anguleuse à l'extérieur qui serait susceptible d'abîmer le plateau.

Selon un autre exemple de mise en oeuvre de l'invention, le crochet comporte un second doigt d'accrochage recourbé dont l'extrémité libre n'est ni aplatie, ni élargie latéralement. Ainsi, comportant à la fois un doigt d'accrochage recourbé selon l'invention et un doigt d'accrochage recourbé classique, le crochet permet à l'utilisateur de choisir de fixer son crochet de façon classique ou nouvelle selon la configuration du chargement qui s'offre à lui. Dans le cas où un orifice traversant du plateau ne permet pas la pénétration du doigt d'accrochage recourbé selon l'invention, par exemple en raison d'une déformation de celui-ci, l'utilisateur peut alors y faire pénétrer le doigt d'accrochage recourbé classique, qui est plus étroit. Ainsi, le crochet double selon l'invention présente un caractère polyvalent particulièrement avantageux. Le crochet double est également utile pour arrimer des charges sur un plateau dans une zone de celui-ci ne comportant pas d'orifices traversants oblongs, mais de simples orifices traversants circulaire, par exemple du genre simple trou dans une tôle épaisse ou sur un chant de tôle verticale.

Selon un exemple supplémentaire de mise en oeuvre de l'invention, le second doigt d'accrochage recourbé est prévu à l'opposé de l'autre doigt d'accrochage recourbé par rapport à la partie de liaison de manière à ce que le crochet d'arrimage forme un S.

Selon un exemple de mise en oeuvre de l'invention, le crochet d'arrimage est forgé en acier, ce qui permet avantageusement de le produire à coût réduit.

Selon un autre exemple de mise en oeuvre de l'invention la partie intermédiaire est de section générale sensiblement ronde ou ovale, de sorte que, quelle que soit l'orientation de la partie intermédiaire lorsque le crochet est engagé dans un orifice traversant prévu dans le plateau du véhicule de transport, la partie intermédiaire ne peut pas détériorer les bords dudit orifice traversant.

Les avantages de la présente invention sont particulièrement nombreux. Le crochet selon l'invention permet d'éviter que son extrémité libre ne creuse la matière en sous-face des plateaux par un phénomène de matage de la matière, sans avoir à apporter la moindre modification aux plateaux actuels.

Sa conformation lui permet de multiples orientations par rapport au plateau, et aucune de ces orientations n'est susceptible de détériorer ledit plateau. Le rotulage d'un étrier offre en outre une grande liberté de mouvement et d'orientation pour la sangle reliée au crochet selon l'invention.

La forme spécifique du crochet, et notamment au niveau de la spatule, procure d'autres avantages.

Grâce aux extensions latérales qui se positionnent transversalement par rapport aux orifices oblongs du plateau, le crochet ne peut pas facilement se désengager desdits orifices. Pour désengager le crochet il faut libérer totalement la tension de la sangle et même la relâcher totalement, et ensuite extraite le crochet de l'orifice où il est logé en le faisant pivoter sur lui-même. Ainsi en cas de perte de tension temporaire le crochet ne pourra jamais sortir de l'orifice.

De même, l'arrimage est indépendant de l'orientation du crochet dans l'orifice du plateau.

Les orifices oblongs du plateau peuvent être orientés dans le sens longitudinal du plateau ou être perpendiculaire.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :

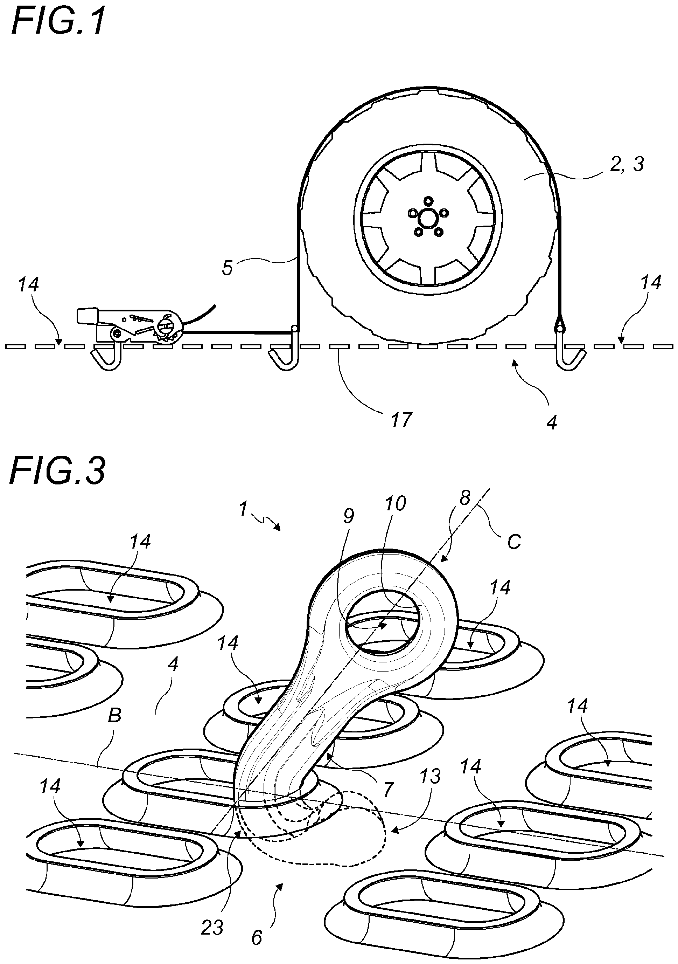

- la figure 1 est une vue de profil illustrant l'immobilisation d'une roue sur le plateau d'un véhicule de transport par un système d'arrimage comprenant des crochets selon l'art antérieur ;
- la figure 2 est une vue de profil illustrant l'immobilisation d'une roue sur le plateau d'un véhicule de transport par un système d'arrimage comprenant des crochets selon l'invention ;
- la figure 3 est une vue en perspective illustrant le logement d'un crochet selon l'invention dans un des orifices traversants de forme oblongue du plateau d'un véhicule de transport ;
- la figure 4 est une vue en perspective de face d'un crochet selon l'invention équipé d'un étrier ;
- la figure 5 est une vue en perspective de dos d'un crochet selon l'invention ;
- la figure 6 est une vue de face d'un crochet selon l'invention ;
- la figure 7 est une vue de profil d'un crochet selon l'invention ;
- les figures 8 et 9 sont des vues en perspective d'un crochet selon une variante de l'invention dite « crochet double » et équipé d'un étrier ;
- les figures 10 à 13 sont des vues de profil d'un crochet selon l'invention équipé d'un étrier et logé dans un des orifices traversants de forme oblongue du plateau d'un véhicule de transport, ces figures illustrant plusieurs angles orientations du crochet ;
- la figure 14 est une vue en perspective illustrant un « crochet double » selon l'invention dans lequel l'étrier est sous forme d'une manille logée à rotation dans l'orifice de la partie de liaison ;
- la figure 15 est une vue en perspective illustrant un crochet selon l'invention dans lequel la partie de liaison est conformée en étrier ; et
- la figure 16 est une vue en perspective illustrant un « crochet double » selon l'invention dans lequel la partie de liaison est conformée en étrier.

### Mode(s) de réalisation de l'invention

Les éléments structurellement et fonctionnellement identiques présents sur plusieurs figures distinctes, sont affectés d'une même référence numérique ou alphanumérique.

Le crochet d'arrimage (1) selon l'invention est prévu pour l'arrimage d'une charge (2), par exemple la roue (3) d'un véhicule, sur le plateau (4) d'un véhicule de transport au moyen d'une sangle (5).

Il comporte un doigt d'accrochage recourbé (6), une partie intermédiaire (7) et une partie de liaison (8).

La partie de liaison (8) est de préférence annulaire et présente un orifice (9), préférentiellement délimité dans sa partie interne par des bords arrondis (10), et destiné à recevoir la sangle (5) ou, plus préférentiellement, un organe de liaison (11) fixé à la sangle (5), par exemple un étrier (12). La partie de liaison (8) est préférentiellement de forme torique.

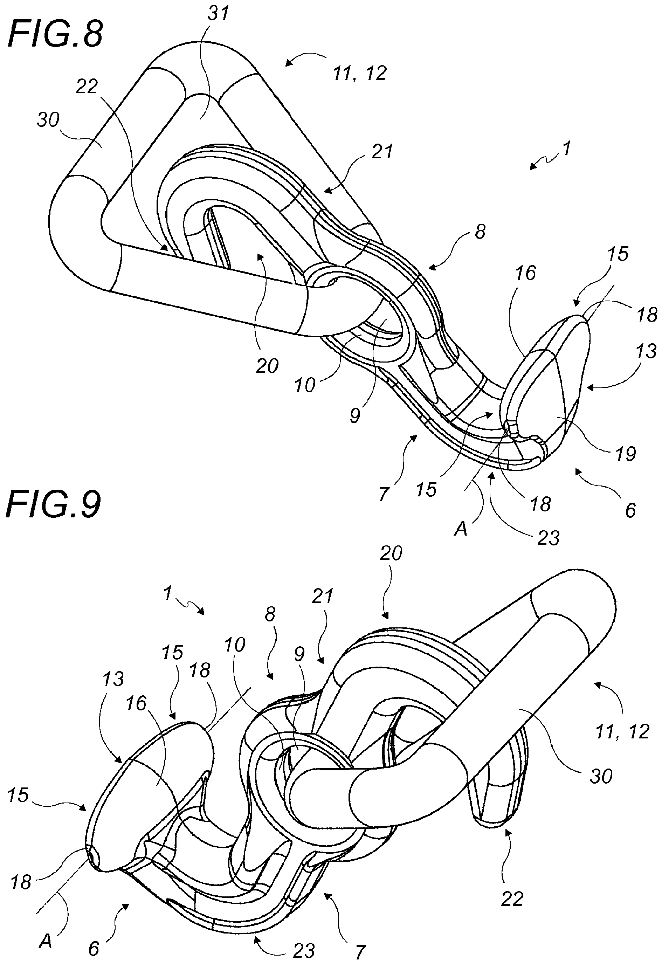

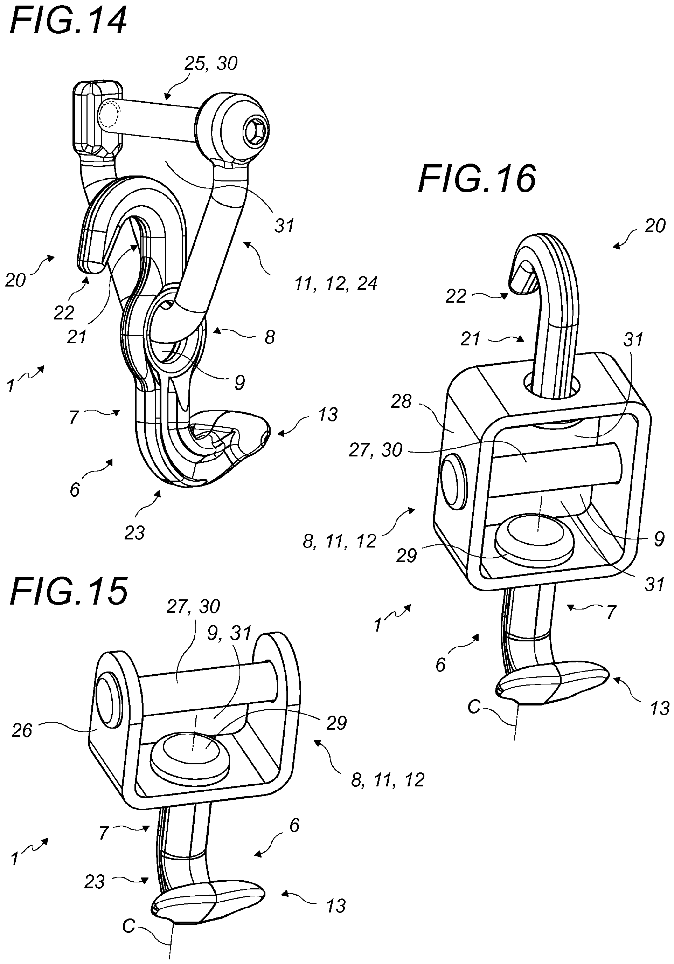

Par étrier (12) on entend toute pièce du crochet d'arrimage (1) qui est prévue pour réaliser un renvoi de la sangle (5) reliée au crochet (1) et permettre le coulissement aisé de la sangle (5) par rapport au crochet (1). Différentes variantes d'étrier (12) sont illustrées à titre d'exemples sur les figures 8, 14, 15 et 16. Comme illustré sur la figure 15, la partie de liaison (8) peut également présenter n'importe quelle autre forme, car celle-ci n'est habituellement pas en contact avec le plateau (4) et n'est donc pas susceptible de le détériorer par la présence d'arrêtes saillantes.

La partie intermédiaire (7) relie le doigt d'accrochage recourbé (6) à la partie de liaison (8). Elle est allongée, préférentiellement rectiligne, et se prolonge selon un axe C. Les portions de la partie intermédiaire (7) qui sont destinées à venir en contact les orifices traversants (14) du plateau (4) sont arrondies. La partie intermédiaire (7) est préférentiellement de section générale sensiblement ronde ou ovale.

Le doigt d'accrochage recourbé (6) comporte une partie courbe (23) dont les portions destinées à venir en contact les orifices traversants sont arrondies. Cette partie courbe (23) étant susceptible de venir en contact avec le bord des orifices traversants (14) du plateau (4), ces faces sont aussi arrondies.

L'extrémité libre du doigt d'accrochage recourbé (6) est destinée à être introduite dans des orifices traversants (14), habituellement oblongs, prévus dans le plateau (4) du véhicule de transport.

Cette extrémité libre comporte une spatule (13), qui est une pièce aplatie qui se prolonge latéralement de chaque côté par une extension latérale (15).

Par sa forme aplatie, la spatule (13) présente une faible épaisseur qui permet avantageusement son introduction dans les orifices traversants (14) du plateau (4), et ce malgré la surépaisseur procurée par la face supérieure (16) bombée convexe de la spatule (13) (voir plus loin).

Le rayon de la partie courbe (23) du doigt d'accrochage recourbé (6) est étudié pour garantir le contact de la spatule (13) sous le plateau (4) pour tous les angles que peut prendre le crochet d'arrimage (1).

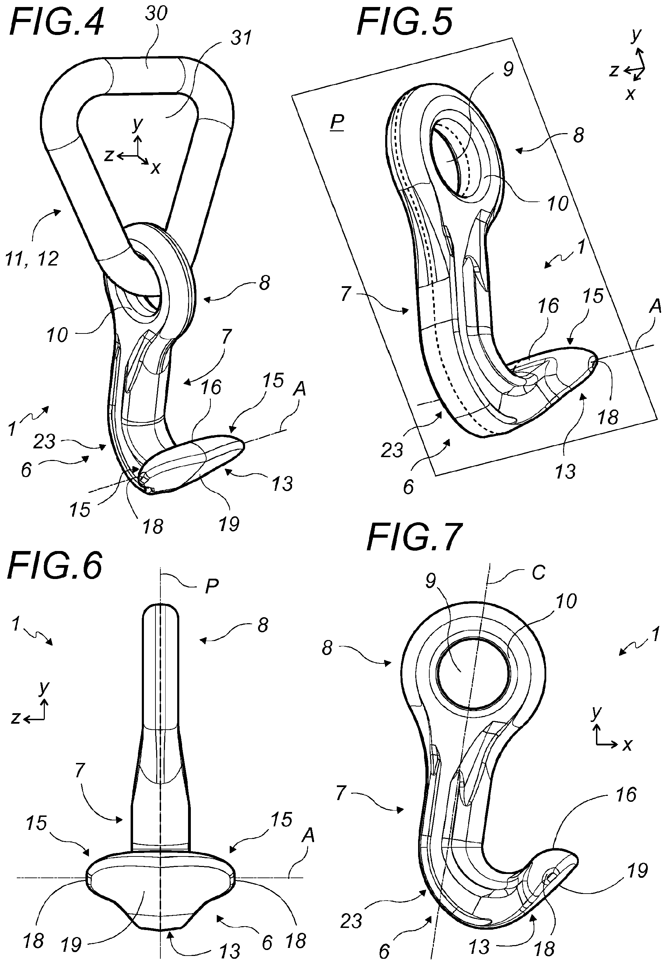

Lorsque le crochet d'arrimage (1) est considéré avec sa partie de liaison (8) en haut et son doigt d'accrochage recourbé (6) en bas (voir par exemple la figure 7), la face supérieure (16) de la spatule (13) présente un profil arrondi. Cette face supérieure (16) est dirigée en regard vers la partie de liaison (8). Il s'agit de la partie du doigt d'accrochage recourbé (6) qui est prévue pour venir en contact contre la sous-face (17) du plateau (4).

Selon un mode de réalisation préféré de l'invention, la face supérieure (16) de la spatule (13) est bombée convexe. Ainsi, non seulement la spatule (13) présente un profil arrondi lorsque considérée de profil dans le plan X-Y (voir figures 4 et 7), mais elle présente également un profil arrondi lorsque considérée de profil dans un autre plan, préférentiellement dans le plan Y-Z (voir figures 4 et 6). Ainsi, la face supérieure (16) de la spatule (13) est une combinaison, préférentiellement orthogonale, de deux courbures positives. Ainsi, la face supérieure (16) de la spatule (13) présente une forme de calotte sensiblement sphérique, ce qui distingue bien la spatule (13) de l'invention des simples spatules cylindriques, dont la face supérieure présente au plus qu'un seul profil arrondi.

Une telle combinaison de deux courbures positives procure une surface de contact (16) bombée convexe qui permet avantageusement un léger pivotement des extensions latérales (15) par rapport au plateau (4) lorsqu'elles sont en contact contre la sous-face (17) de celui-ci. Ce pivotement permet avantageusement d'orienter légèrement le crochet d'arrimage (1), même lorsqu'il est plaqué contre la sous-face (17) du plateau (4), ce qui procure une légère possibilité d'orientation de la sangle (5) et évite notamment de détériorer la sous-face (17) du plateau (4).

Une combinaison orthogonale de deux courbures positives permet avantageusement d'avoir un crochet d'arrimage (1) symétrique, mais les deux courbures positives peuvent également être combinée selon d'autres angles et de manière non-orthogonale.

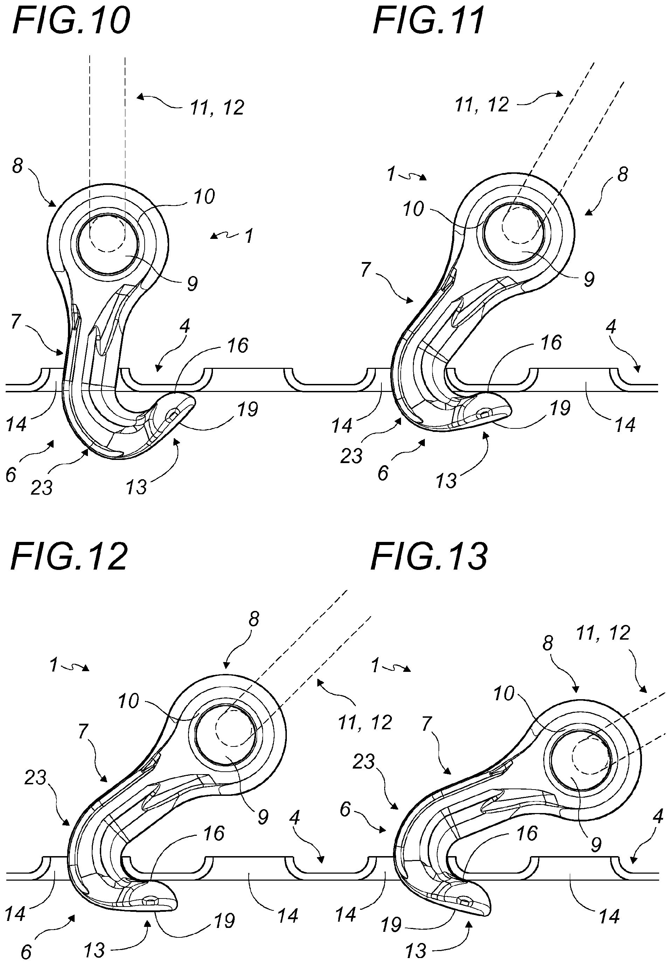

Comme cela apparaît sur les figures 10 à 13, la partie arrondie de la face supérieure (16) de la spatule (13) permet de s'assurer que le crochet d'arrimage (1) est toujours en contact contre la sous-face (17) du plateau (4) par les extensions latérales (15), quel que soit l'angle d'inclinaison longitudinal du crochet d'arrimage (1) par rapport audit plateau (4).

Pour illustrer cet avantage de l'invention, la figure 10 représente un crochet d'arrimage (1) selon l'invention représenté en position d'appui contre la sous-face (17) du plateau (4) lorsqu'il subit une traction dirigée vers le haut selon un angle de 90° par rapport au plan horizontal dudit plateau (4). Sur la figure 11, cet angle est de 60°, tandis qu'il est de 45° sur la figure 12 et de 30° sur la figure 13.

Sur ces figures, quel que soit l'angle d'inclinaison du crochet d'arrimage (1) dans un plan vertical longitudinal, on remarque qu'il est toujours en appui contre la sous-face (17) du plateau (4) par ses extensions latérales (15). Par plan vertical longitudinal, on entend tout plan parallèle au plan X-Y représenté sur les figures 4, 5 et 7.

La forme bombée convexe de la spatule (13) permet un léger pivotement du crochet d'arrimage (1) selon n'importe quel axe horizontal en plus de celui transversal autorisé par la spatule (13).

L'axe (A) selon lequel se prolongent les extensions latérales (15) est orthogonal à la partie intermédiaire (7), de sorte que la spatule (13) du crochet d'arrimage (1) selon l'invention adopte la forme générale d'une queue de poisson arrondie sur le dessus.

L'axe (A) selon lequel se prolongent les extensions latérales (15) est orthogonal au plan dans lequel s'étend la partie de liaison (8), c'est-à-dire orthogonal au plan X-Y représenté sur les figures 4, 5 et 7.

Lorsque le crochet d'arrimage (1) est considéré avec sa partie de liaison (8) en haut et son doigt d'accrochage recourbé (6) en bas (voir par exemple la figure 10), l'axe (A) dans lequel se prolongent les extensions latérales (15) est un axe horizontal qui est orthogonal à la direction longitudinale (B) dans laquelle s'étendent les orifices traversants (14) oblongs prévus dans le plateau (4) du véhicule de transport.

En se référant aux figures 4 à 7, l'axe (A) dans lequel se prolongent les extensions latérales (15) est parallèle à l'axe Z représenté sur ces figures, tandis que la direction longitudinale (B) dans laquelle s'étendent les orifices traversants (14) oblongs est généralement parallèle à l'axe X représenté sur ces figures.

Lorsque considéré positionné comme sur la figure 7, le crochet d'arrimage (1) selon l'invention présente préférentiellement un plan de symétrie vertical passant par le plan (P) dans lequel s'étend la partie de liaison (8). Ce plan (P) est représenté sur les figures 5 et 6, avec sa zone de contact avec le crochet d'arrimage (1) étant représentée en traits discontinus. En se référant aux figures 4 à 7, le plan (P) est parallèle au plan XY représenté sur ces figures.

Ainsi le doigt d'accrochage recourbé (6) et la partie de liaison (8) sont situés dans un même plan général, et les extensions latérales (15) se prolongent selon un axe (A) orthogonal à ce plan.

L'extrémité libre (18) de chacune des extensions latérales (15) est bombée convexe, et de manière plus générale, le doigt d'accrochage recourbé (6) ne présente aucune partie anguleuse en relief, susceptible de détériorer toute surface contre laquelle elle pourrait venir en contact.

Ainsi, grâce aux arrondis, lors de la mise en tension de la sangle (5) à laquelle est relié le crochet d'arrimage (1) selon l'invention, la spatule (16) appuie sous le plateau (4) sans créer de concentration de contraintes.

Par absence de partie anguleuse, on entend que le doigt d'accrochage recourbé (6) ne présente aucune arrête saillante ni aucune partie pointue. Par convexe on entend qui présente une courbure en saillie, qui est arrondi en dehors.

Lorsque la partie de liaison (8) est annulaire, son orifice (9) est préférentiellement de forme générale circulaire ou ovale.

Selon un mode de réalisation préféré de l'invention représenté sur la figure 4, la partie de liaison (8) du crochet d'arrimage (1) est équipée d'un étrier (12) d'attache de sangle (5).

Comme illustré sur les figures 4 et 8, l'étrier (12) peut être monté à rotation dans l'orifice (9) de la partie de liaison (8), de préférence selon trois degrés de liberté en rotation lorsque la partie de liaison (8) est de forme torique. Le rotulage de l'étrier (12) laisse libre les rotations suivant z et x. Ainsi, si la sangle (5) n'est pas parfaitement alignée avec le crochet d'arrimage (1), ces libertés de rotation permettent au doigt d'accrochage recourbé (6) de trouver son appui sous le plateau (4) sans être contraint.

Comme illustré sur la figure 15, la partie de liaison (8) peut également être conformée en étrier (12). Selon cette variante, la partie de liaison (8) conformée en étrier (12) peut être d'une seule pièce avec le reste du crochet d'arrimage (1), ou être montée pivotante sur la partie intermédiaire (7).

Sur cette figure, l'étrier (12) comprend une pièce recourbée (26) sensiblement en forme de U, et une tige (27) prévue pour la fixation de la sangle (5) et fixé entre les deux bras du U de la pièce recourbée (26). Cette tige (27) est préférentiellement montée à rotation entre les deux bras du U de la pièce recourbée (26).

Comme illustré sur la figure 15, l'étrier (12) peut être monté pivotant sur la partie intermédiaire (7) autour de l'axe longitudinal C de ladite partie intermédiaire (7). Dans ce cas, la pièce recourbée (26) peut présenter un orifice traversant à travers lequel est introduite la partie intermédiaire (7), l'extrémité libre de celle-ci comportant alors une partie élargie (29) empêchant le retrait de la partie intermédiaire (7) hors dudit orifice traversant.

Généralement, l'étrier (12) est réalisé à partir d'une barre de section circulaire cintrée et soudée après insertion dans la partie de liaison (8). La sangle (5) est ensuite cousue sur l'étrier (12). Ces pièces (5, 8, 12) sont donc habituellement indissociables.

On peut cependant envisager une variante de l'invention telle qu'illustrée sur la figure 14, dans laquelle l'étrier (12) est sous la forme d'une sorte de manille (24) pouvant être ouverte et refermée par une vis (25). Selon cette variante, la sangle (5) (non représentée sur la figure 14) est terminée par une boucle cousue à l'avance et prévue pour être montée sur la vis de l'étrier (12). Ainsi, selon cette variante, le crochet d'arrimage (1) de l'invention comporte un étrier (12) sous la forme d'une manille (24) traversée par une vis (25), et une sangle (5), le tout pouvant être assemblé séparément. L'étrier (12) sous forme de manille (24) est conformé pour permettre son passage dans l'orifice central (9) de la partie de liaison (8) du crochet d'arrimage (1).

La face inférieure (19) de la spatule (13) du doigt d'accrochage recourbé (6) qui est dirigée en éloignement de la partie de liaison (8) est préférentiellement une surface sensiblement plane, bien que très légèrement bombée convexe.

Selon une variante préférée de l'invention représentée sur les figures 8, 9, 14 et 16, le crochet d'arrimage (1) comporte un second doigt d'accrochage recourbé (20).

Ce second doigt d'accrochage recourbé (20) est préférentiellement prévu à l'opposé de l'autre doigt d'accrochage recourbé (6) par rapport à la partie de liaison (8) de manière à ce que le crochet d'arrimage (1) forme un S. Il peut également être prévu autrement, par exemple à angle droit par rapport à l'autre doigt d'accrochage recourbé (6).

Le second doigt d'accrochage recourbé (20) et la partie de liaison (8) sont reliés par une seconde partie intermédiaire (21) allongée, préférentiellement rectiligne et de section générale sensiblement ronde ou ovale.

Ce second doigt d'accrochage recourbé (20) présente une forme classique, bien que préférentiellement dépourvue d'aucune partie anguleuse en relief. Ainsi, l'extrémité libre (22) du second doigt d'accrochage recourbé (20) n'est ni aplatie, ni élargie latéralement.

Tel qu'illustré sur la figure 16, les deux doigts d'accrochage recourbés (6 et 20) peuvent être montés pivotant sur la partie intermédiaire (7).

Sur cette figure 16, la partie de liaison (8) est conformée en étrier (12). Elle comprend une boucle (28) dans laquelle est montée une tige (27), préférentiellement à rotation, prévue pour la fixation de la sangle (5). Sur cette figure, la boucle (28) est de forme générale sensiblement carrée, mais elle peut présenter n'importe quelle autre forme, par exemple annulaire. Sur cette figure 16, la partie intermédiaire (7), le doigt d'accrochage recourbé (6) et la spatule (13) sont similaire à ceux de la figure 15.

Dans le crochet d'arrimage (1) de l'invention, le doigt d'accrochage recourbé (6), une partie intermédiaire (7) et la spatule (13) sont conformés d'une seule pièce en métal.

Dans le cas où la partie de liaison (8) et le doigt d'accrochage recourbé (6) ne sont pas prévus pivotant l'un par rapport à l'autre, la partie de liaison (8) peut également être d'une seule pièce avec le reste du crochet (1). Ainsi, dans ce cas, c'est tout le crochet (1) qui est d'une seule pièce en métal.

Le crochet d'arrimage (1) selon l'invention et ses parties constitutives sont préférentiellement forgées en acier.

L'étrier (12) comprend généralement une pièce transversale (30) de section arrondie autour de laquelle la sangle (5) peut coulisser librement. Cette pièce transversale (30) est prévue à distance du reste du crochet d'arrimage (1) de sorte qu'il existe un espace libre (31) entre ladite pièce transversale (30) et les autres parties du crochet d'arrimage (1) qui permet ce libre coulissement.

Dans le cas où l'étrier (12) est sous la forme d'une manille (24), la pièce transversale (30) autour de laquelle la sangle (5) coulisse peut être constituée par la vis (25) de ladite manille (24).

Dans le cas où la partie de liaison (8) est conformée en étrier (12) et où elle comprend une pièce recourbée (26) sensiblement en forme de U et une tige (27), la pièce transversale (30) autour de laquelle la sangle (5) coulisse peut être constituée par ladite tige (27).

## Revendications

1. Crochet d'arrimage (1) d'une charge (2) sur le plateau (4) d'un véhicule de transport au moyen d'une sangle (5), ledit crochet d'arrimage (1) comportant un doigt d'accrochage recourbé (6) dont l'extrémité libre est destinée à être introduite dans des orifices traversant (14) prévus dans le plateau (4) du véhicule de transport et comportant une partie de liaison (8) présentant un orifice (9) destiné à recevoir la sangle (5) ou un organe de liaison (11) fixé à la sangle (5), le doigt d'accrochage recourbé (6) et la partie de liaison (8) étant reliés par une partie intermédiaire (7), **caractérisé en ce que** :
• la partie intermédiaire (7) est allongée et ses portions destinées à venir en contact les orifices traversant (14) du plateau (4) sont arrondies ;
• le doigt d'accrochage recourbé (6) comporte une partie courbe (23) dont les portions destinées à venir en contact les orifices traversant sont arrondies ;
• au niveau de son extrémité libre, le doigt d'accrochage recourbé (6) comporte une spatule (13), ladite spatule (13) étant de forme aplatie et se prolongeant latéralement de chaque côté par une extension latérale (15), la face supérieure (16) de la spatule (13) qui est dirigée en regard vers la partie de liaison (8) et est prévue, en utilisation, pour venir en contact contre la sous-face (17) du plateau (4), étant arrondie en relief lorsque considérée de profil et étant une surface de contact bombée convexe, de sorte que la face supérieure (16) de la spatule (13) est une combinaison orthogonale de deux courbures positives ; et
• le doigt d'accrochage recourbé (6), la partie intermédiaire (7) et la spatule (13) sont conformés d'une seule pièce en métal.

2. Crochet d'arrimage (1) selon la revendication 1, **caractérisé en ce que** la partie de liaison (8) est de forme annulaire et **en ce qu'**elle présente un orifice (9) central de forme générale circulaire ou ovale.

3. Crochet d'arrimage (1) selon la revendication 1 ou la revendication 2, **caractérisé en ce que** l'axe (A) dans lequel se prolongent les extensions latérales (15) est orthogonal au plan (P) dans lequel s'étend la partie de liaison (8).

4. Crochet d'arrimage (1) selon l'une quelconque des revendications précédentes, **caractérisé en ce que** l'axe (A) des extensions latérales (15) est orthogonal à la partie intermédiaire (7).

5. Crochet d'arrimage (1) selon l'une quelconque des revendications précédentes, **caractérisé en ce que** le doigt d'accrochage recourbé (6) et la partie de liaison (8) sont situés dans un même plan.

6. Crochet d'arrimage (1) selon l'une quelconque des revendications précédentes, **caractérisé en ce que** l'extrémité libre (18) de chaque extension latérale (15) est bombée convexe.

7. Crochet d'arrimage (1) selon l'une quelconque des revendications précédentes, **caractérisé en ce que** le doigt d'accrochage recourbé (6) ne présente aucune partie anguleuse en relief.

8. Crochet d'arrimage (1) selon l'une quelconque des revendications précédentes, **caractérisé en ce que** la partie de liaison (8) est équipée d'un étrier (12) d'attache de sangle (5), et **en ce que** :
- soit la partie de liaison (8) est conformée en étrier (12) ;
- soit l'étrier (12) est une pièce distincte de la partie de liaison (8) qui est montée à rotation dans l'orifice (9) la partie de liaison (8).

9. Crochet d'arrimage (1) selon la revendication précédente, **caractérisé en ce que** l'étrier (12) est monté à rotation dans l'orifice (9) de la partie de liaison (8) selon trois degrés de liberté en rotation.

10. Crochet d'arrimage (1) selon l'une quelconque des revendications précédentes, **caractérisé en ce que** la face inférieure (19) de la spatule (13) qui est dirigée en éloignement de la partie de liaison (8) est une surface sensiblement plane.

11. Crochet d'arrimage (1) selon la revendication 2, **caractérisé en ce que** la partie de liaison (8) est de forme torique.

12. Crochet d'arrimage (1) selon l'une quelconque des revendications précédentes, **caractérisé en ce qu'**il comporte un second doigt d'accrochage recourbé (20) dont l'extrémité libre (22) n'est ni aplatie, ni élargie latéralement, le second doigt d'accrochage recourbé (20) et la partie de liaison (8) étant reliés par une seconde partie intermédiaire (21) allongée.

13. Crochet d'arrimage (1) selon la revendication précédente, **caractérisé en ce que** le second doigt d'accrochage recourbé (20) est prévu à l'opposé de l'autre doigt d'accrochage recourbé (6) par rapport à la partie de liaison (8) de manière à ce que le crochet d'arrimage (1) forme un S.

14. Crochet d'arrimage (1) selon l'une quelconque des revendications précédentes, **caractérisé en ce qu'**il est forgé en acier.

15. Crochet d'arrimage (1) selon l'une quelconque des revendications précédentes, **caractérisé en ce que** la partie intermédiaire (7) est de section générale sensiblement ronde ou ovale.
